# EUROPÄISCHE PATENTSCHRIFT

(11) **EP 0 907 531 B1**
(45) Veröffentlichungstag und Bekanntmachung des Hinweises auf die Patenterteilung: **11.08.2004**
(21) Anmeldenummer: 98910618.2
(22) Anmeldetag: 12.02.1998
(51) Int. Cl.: B60S 1/04, B60S 1/16

(54) **LAGERUNG EINES WISCHERANTRIEBS**
WIPER ARRANGEMENT
PALIER D'UN DISPOSITIF D'ENTRAINEMENT D'ESSUIE-GLACE

(30) Priorität: 22.03.1997 DE 19712113
(43) Veröffentlichungstag der Anmeldung: 14.04.1999
(73) Patentinhaber: ROBERT BOSCH GMBH, 70442 Stuttgart (DE)
(72) Erfinder: MUEHLPFORTE, Kurt, D-77815 Buehl (DE); DIETRICH, Jan, D-77815 Buehl (DE); BECKER, Henk, D-76530 Badan-Baden (DE); FLEISCHER, Claus, D-77815 Buehl (DE); BOOS, Tino, D-76532 Baden-Baden (DE)
(86) Internationale Anmeldenummer: PCT/DE1998/000392
(87) Internationale Veröffentlichungsnummer: WO 1998/042549

(56) Entgegenhaltungen:
- EP-A- 0 430 375
- EP-A- 0 484 175
- EP-A- 0 689 975
- WO-A-90/09299
- WO-A-97/34789
- DE-A- 4 333 484
- US-A- 5 189 790
- US-A- 5 339 667

## Beschreibung

### Stand der Technik

Die Erfindung geht von einer Wischeranlage aus, gemäß den Merkmalen des Oberbegriffs des Patentanspruchs 1 bzw. 8.

Wischeranlagen, insbesondere für Kraftfahrzeuge, werden an der Karosserie des Kraftfahrzeugs befestigt und bestehen im wesentlichen aus einem Wischerantrieb, der über eine Antriebswelle und ein Gestänge Abtriebswellen antreibt, die in Wischerlagern gelagert sind, die aus der Karosserie des Fahrzeugs ragen und auf denen Wischer aufgesteckt sind.

Der Wischerantrieb besteht aus einem Wischermotor und einem Getriebe, dessen Gehäuse einen Lagerstutzen aufweist, in dem eine nach außen ragende Antriebswelle geführt ist. Der Wischerantrieb muß in axialer Richtung und in Umfangsrichtung fixiert werden, damit die Reaktionskräfte des zu übertragenden Drehmoments und die Gewichtskräfte aufgenommen werden können.

Aus der EP-B-0 409 944 (WO-A-90/09299) ist eine Wischeranlage bekannt, die mit einer Aufnahme für den Wischerantrieb an der Karosserie des Kraftfahrzeugs befestigt ist. Der Wischerantrieb ist über drei sternförmig um den Lagerstutzen angeordnete Verschraubungszapfen mit der Aufnahme verbunden oder an das Getriebegehäuse einstückig angeformt. Rohrförmige Träger für die Wischerlager schließen sich seitlich an der Aufnahme an. Sie sind auf Ansätzen aufgesteckt und sind mit diesen formschlüssig verbunden, vorzugsweise indem sie in Ausnehmungen eingedrückt werden. Durch das Eindrücken entsteht eine nicht lösbare Verbindung. Ferner sind bei Wischeranlagen mit zwei Wischerlagern zwei rohrförmige Träger erforderlich, die über zwei Schnittstellen mit der Aufnahme oder mit dem Getriebegehäuse verbunden sind.

Weiter ist aus dem Stand der Technik eine Wischeranlage mit einem rohrförmigen Träger bekannt, an dem zwei Wischerlager befestigt sein können. Die Aufnahme für den Wischerantrieb ist am rohrförmigen Träger angeschweißt. Der Wischerantrieb ist seinerseits mit drei sternförmig um den Lagerstutzen angeordnete Verschraubungszapfen an der Aufnahme befestigt.

Aus der EP-A-0 689 975 ist eine Scheibenwischvorrichtung bekannt, bei der eine Aufnahme einen rohrförmigen Träger formschlüssig und/oder kraftflüssig umfasst, die an Befestigungsbereichen, die am Gehäuse des Getriebes angeordnet sind, befestigt ist.

### Vorteile der Erfindung

Die erfindungsgemäße Lösung mit den Merkmalen des Anspruchs 1 bzw. 8 hat den Vorteil, dass an einem rohrförmigen Träger zwei Wischerlager angeordnet sein können und dabei die Aufnahme nur mit einer Schnittstelle mit dem rohrförmigen Träger form- und/oder kraftschlüssig verbunden ist. Es werden leichte, kompakte und zugleich bei den meisten Ausführungen wieder lösbare Verbindungen erreicht, die kostengünstig und leicht kontrollierbar sind. Die Werkstoffe werden ohne Wärmezufuhr zusammengefügt, so daß eine hierdurch bedingte Aufhärtung, Gefügeumwandlung und Versprödung ausgeschlossen wird. Ungleichartige Werkstoffe lassen sich leicht miteinander verbinden. Die Teile können mit einfachen Werkzeugen montiert werden. Zur kompakten und leichten Bauweise trägt eine Aufnahme bei, die vollständig oder teilweise an das Getriebegehäuse angeformt ist. Es können Schnittstellen, Einzelteile und damit Montageaufwand und Gewicht reduziert werden.

Ferner werden Ausfallstücke reduziert, indem die Verbindung wieder lösbar ist und damit Montagefehler korrigiert bzw. fehlerhafte Teile ausgetauscht werden können. Eine Aufnahme kann für verschiedene rohrförmige Träger verwendet und die Wischeranlage kann auf verschiedenen Einbauvarianten angepasst werden, indem die Aufnahme auf dem rohrförmigen Träger verschoben und/oder um durch die Formschlusskontur vorgegebene Winkelbereiche gedreht wird.

In der Fahrzeugindustrie sind heute Gewichtseinsparungen und damit verbundene Kraftstoffeinsparungen besonders von Bedeutung. Auch geringe Einsparungen an vielen kleinen Einzelbauteilen sind zu beachten, da sie das Gewicht in der Summe direkt und indirekt durch schwächeres Dimensionieren der angrenzenden Bauteile erheblich reduzieren. In einer Ausgestaltung der Erfindung wird der rohrförmige Träger durch ein Innenhochdruckverfahren (IHV) hergestellt, wodurch er hohl, steif, relativ dünnwandig und damit besonders leicht ausgeführt werden kann.

Grundsätzlich ist ein reine formschlüssige und eine reine kraftschlüssige Verbindung denkbar. Vorzugsweise werden jedoch die beiden Verbindungsarten kombiniert verwendet, um zum einen durch den Formschluß hohe Kräfte und Momente aufnehmen zu können und zum anderen durch den Kraftschluß Spielfreiheit zu erreichen. Erfindungsgemäß wird der Formschluß in Umfangsrichtung mit einer unrunden Form des rohrförmigen Trägers und einer passenden Außenkontur der Aufnahme erreicht, beispielsweise mit einer von der Kreisform abweichenden Kontur, wie polygonförmig oder sonstwie regelmäßig oder unregelmäßig, elipsenförmig oder mit einer Verzahnung. In Längsrichtung reicht häufig eine kraftschlüssige Verbindung aus. Müssen jedoch auch in Längsrichtung größere Kräfte aufgenommen werden, kann zusätzlich ein Formschluß durch eine sich in Längsrichtung verändernde Kontur, Abmessung oder Ausrichtung des rohrförmigen Trägers erreicht werden.

Eine einfache Montage ist besonders bei größeren Stückzahlen von Bedeutung. Diese wird erfindungsgemäß mit einem rohrförmigen Träger erreicht, der in eine Einbuchtung der aufnahme formschlüssig in Längs- und/oder Umfangsrichtung eingelegt und anschließende mit einem die Einbuchtung verschließenden Bügel kraftschlüssig fixiert wird. In besonderen Fällen, beispielsweise bei hoher Beanspruchung, kann eine zusätzliche formschlüssige Verbindung zwischen dem Bügel und dem rohrförmigen Träger sinnvoll sein.

Wenn eine Einbuchtung durch einen oder mehrere als Verschraubungszapfen ausgebildete Befestigungsbereiche des Getriebegehäuses teilweise oder vollständig gebildet wird und dessen Schraube für den Kraftschluß mit dem Bügel genutzt wird, werden vorhandene Bauteile mit zusätzlichen Funktionen belegt, zusätzliche Bauteile werden vermieden, wodurch Gewicht und Platz eingespart wird. Ferner trägt hierzu ein nur auf einer Seite verschraubter Bügel bei, auf der anderen Seite formschlüssig am Getriebegehäuse bzw. in die Aufnahme eingehängt ist. Ein derartiger Bügel ist schnell montier- und demontierbar.

Ferner können die Anzahl der Schnittstellen durch vollständig an das Getriebegehäuse angeformte Aufnahmen verringert werden. Dies wird erfindungsgemäß nach Anspruch 8 mit Aufnahmeflächen erreicht, die an den Füßen von vorzugsweise zwei Verschraubungszapfen angeformt sind. Der rohrförmige Träger wird kraftschlüssig und möglicherweise auch formschlüssig in den Aufnahmeflächen fixiert. Er besitzt hierfür Öffnungen bzw. Stufenbohrungen, durch die die Verschraubungszapfen gesteckt sind. Der Kraftschluß wird mit den Schrauben der Verschraubungszapfen erzeugt, mit denen der rohrförmige Träger in die Aufnahmeflächen gepreßt wird. Hierdurch wird eine sehr kompakte und leichte Konstruktion mit wenigen Bauteilen erreicht. Um die Klemmkraft gleichmäßig auf den rohrförmigen Träger zu verteilen und eine gute Führung zu erreichen, kann eine Versteifungsschale zwischen den Schrauben und dem rohrförmigen Träger eingelegt werden. Insbesondere kann ohne ein zusätzliches Element die Klemmkraft besser verteilt und eine vorteilhafte Zentrierung erreicht werden, indem konische Stutzen an den rohrformigen Träger angeformt werden, vorzugsweise durch ein Innenhochdruckverfahren, die sich formschlüssig an entsprechend geformte Verschraubungszapfen anschließen. Angeformte Stutzen können zudem genutzt werden, den rohrförmigen Träger in den Aufnahmeflächen zu zentrieren. Eine bessere Führung und Kraftverteilung kann ferner mit einem größeren Teilkreis der Verschraubungszapfen erreicht werden, indem sich der Abstand zwischen den Krafteinleitungsstellen vergrößert.

Häufig ist es vorteilhaft Arbeitsgänge in bestehende Verfahrensschritte der Herstellung zu integrieren. Hierdurch können der Montageaufwand und die Anzahl der Schnittstellen erheblich verringert werden. Dies wird mit einem Innenhochdruckverfahren erreicht. Hierfür wird vorzugsweise ein Stanz-/Biegeteil als Aufnahme verwendet, welches hoch und tief gestellte Schalen aufweist. Ein noch runder rohrförmiger Träger wird durch die Schalen geschoben und anschließen mit der Aufnahme in ein Innenhochdruckverfahren-Werkzeug eingelegt. Der rohrförmige Träger wird anschließend mit Druck beaufschlagt, so daß sich dieser gemeinsam mit den Schalen an die Innenwand des Innenhochdruckverfahren-Werkzeugs anlegt. Die Innenwand ist vorzugsweise unrund ausgestaltet, damit in Umfangsrichtung ein Formschluß zwischen der Aufnahme und dem rohrförmigen Träger erreicht wird. Die Schalen können von Beginn an unrund, entsprechend der Innenkontur des Innenhochdruckverfahren-Werkzeugs vorgeformt sein. Sie sind vorzugsweise so weit vorgeformt, daß durch eine gemeinsames Verformen eine dauerhafte form- und kraftschlüssige Verbindung zwischen dem rohrförmigen Träger und den Schalen entsteht, ohne daß zu hohe Drücke aufgrund der Materialanhäufung angewendet werden müssen.

### Zeichnung

In der Zeichnung sind Ausführungsbeispiele der Erfindung dargestellt. Die Beschreibung und die Ansprüche enthalten zahlreiche Merkmale im Zusammenhang. Der Fachmann wird die Merkmale zweckmäßigerweise auch einzeln betrachten und zu weiteren sinnvollen Kombinationen zusammenfassen.

Die Figuren 1 und 2, sowie die Figuren 8 bis 10 stellen hierbei keine Ausführungsbeispiele der Erfindung dar. Diese Figuren sollen lediglich das Verständnis der Erfindung erleichtern.

Es zeigen:
- Fig. 1: eine Ansicht einer Wischeranlage mit einer Aufnahme von oben,
- Fig. 2: eine Schnittansicht entlang der Linie II-II in Figur 1,
- Fig. 3: eine Ansicht eines Wischerantriebs mit einer teilweise angeformten Aufnahme,
- Fig. 4: eine Schnittansicht entlang der Linie IV-IV in Figur 3,
- Fig. 5: eine Wischeranlage mit vollständig angeformter Aufnahme,
- Fig. 6: eine Schnittansicht durch den rohrförmigen Träger entlang der Linie VI-VI in Figur 5,
- Fig. 7: eine Draufsicht von Figur 6,
- Fig. 8: eine Ansicht einer Wischeranlage mit einem Platinenblech mit hoch und tief gestellten Schalen,
- Fig. 9: eine Schnittansicht entlang der Linie IX-IX in Figur 8 und
- Fig. 10: den rohrförmigen Träger und die Aufnahme aus Figur 8 in einem Innenhochdruckverfahren-Werkzeug.

### Beschreibung der Ausführungsbeispiele

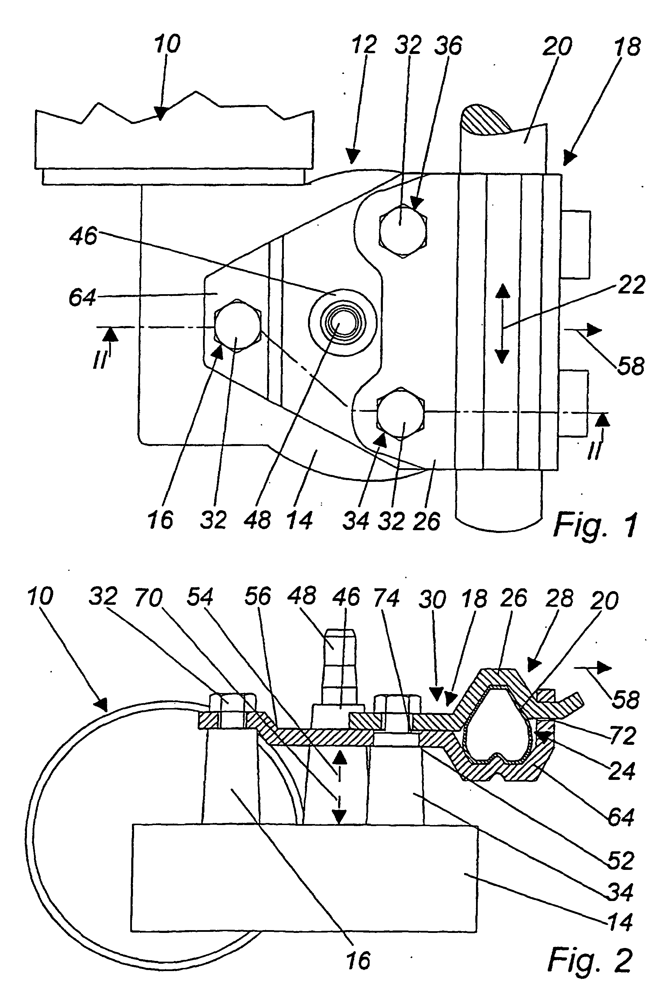

In Figur 1 und 2 ist eine Wischeranlage mit einem Wischermotor 10 und einem Getriebe 12 dargestellt, dessen Gehause 14 einen Lagerstutzen 46 aufweist, in dem eine nach außen ragende Antriebswelle 48 geführt ist, um die sternformig jeweils um 120 Grad versetzt drei als Verschraubungszapfen 16, 34, 36 ausgebildete Befestigungsbereiche 16, 34, 36 angeordnet sind. Das Getriebegehäuse 14 ist über eine aus zwei Bügeln 64, 26 bestehende Aufnahme 18 mit einem rohrförmigen Träger 20 verbunden (Figur 2). Vorzugsweise sind zwei Verschraubungszapfen 34, 36 in Richtung 58 des rohrförmigen Trägers 20 nebeneinander parallel zu diesem angeordnet. Der erste Bügel 64 der Aufnahme 18 wird auf die Verschraubungszapfen 16, 34, 36 aufgelegt. Er wird mit einer Schraube 32 an einen Verschraubungszapfen 16 verschraubt, der vorzugsweise gegenüber den übrigen Verschraubungszapfen 34, 36 am weitesten vom rohrförmigen Träger 20 entfernt ist. Der rohrförmige Träger 20 wird anschließend in eine rinnenförmige Einbuchtung formschlüssig in Umfangsrichtung und/oder in Längsrichtung 22 eingelegt. Dies kann beispielsweise mit Verzahnungen oder sonstwie unrunden Profilierungen erreicht werden. Speziell in Längsrichtung 22 ist ein Formschluß durch eine sich in dieser Richtung verändernden Kontur, Abmessung oder Ausrichtung des rohrförmigen Trägers 20 denkbar, beispielsweise indem dieser angrenzend an die Bügel 26, 64 quer zur Längsrichtung 22 verformt ist.

Die Einbuchtung 24 wird dann mit dem zweiten Bügel 26 verschlossen, indem dieser auf der dem Getriebe 12 abweisenden Seite 28 in den ersten Bügel 64 formschlüssig eingehängt ist, wie beispielsweise in Figur 2 gezeigt in eine sich in Längsrichtung 22 erstreckende Öffnung 72. Auf der gegenüberliegenden Seite 30 des rohrformigen Trägers 20 wird der Bügel 26 mit zwei parallel zum rohrförmigen Träger 20 angeordneten Verschraubungszapfen 34, 36 verschraubt. Der Bügel 26 stützt sich auf dem rohrförmigen Träger 20 ab, möglicherweise auch formschlüssig, wodurch beim Verschrauben des Bügels 26 eine Klemmkraft auf den rohrförmigen Träger 20 entsteht. Dieser wird damit form- und kraftschlüssig in der Einbuchtung 24 fixiert. Die Bügel 26, 64 erstrecken sich mindestens über den Abstand der beiden sich in Richtung 58 befindlichen Verschraubungszapfen 34, 36, wodurch bei einer verteilten Klemmkraft eine gute Führung ohne kritische Flächenpressung erreicht wird.

Die Verschraubungszapfen 16, 34, 36 einschließlich ihrer Schrauben 32 schließen vorteilhafterweise in Richtung 54 der Antriebswelle 48 auf einer Ebene ab, damit sich ein auf der Antriebswelle 48 zu befestigendes Gestänge frei bewegen kann, ohne an weiter herausragende Verschraubungszapfen 16, 34, 36 angepaßt werden zu müssen. Dies wird beispielsweise mit einem Bügel 64 erreicht (Figur 2), der in Richtung 58 eine sich in Richtung 70 auf das Getriebegehäuse 14 zu erstreckende Stufe 56 aufweist und auf in Richtung 70 versetzten Auflageflächen 52 auf den nebeneinander parallel zum rohrförmigen Träger 20 angeordneten Verschraubungszapfen 34, 36 aufliegt. Die Stufenhöhe entspricht ca. der Dicke des zweiten Bügels 26, wodurch die Oberkannten der Schrauben 32 nahezu auf einer Ebene liegen. Der Kraftfluß zwischen den beiden Bügeln 26, 64 wird günstig, wenn diese aufeinander verpreßt werden. Dies wird beispielsweise mit Verschraubungszapfen 34, 36 erreicht, bei denen der Abstand zwischen der Auflagefläche 52 und der Stirnfläche 74 kleiner als die Dicke des ersten Bügels 64 ist, und damit die Bügel 26, 64 durch das Verschrauben gegenseitig in Anlage kommen.

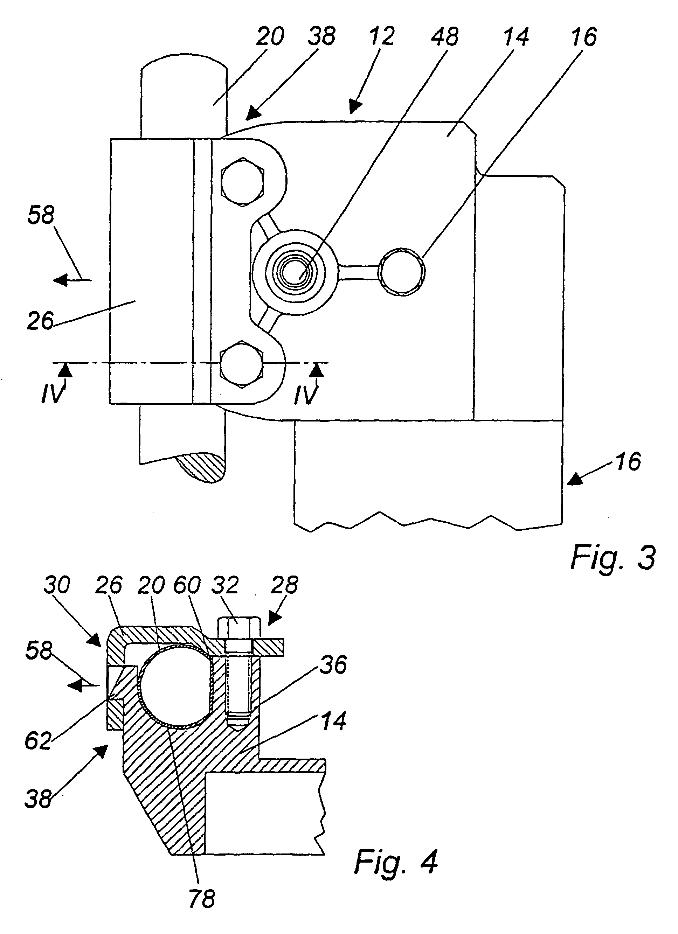

In Figur 3 und 4 ist eine Wischeranlage mit einer teilweise am Gehäuse 14 angeformter Aufnahme 38 dargestellt. Das Gehäuse 14 weist drei Verschraubungszapfen 16, 34, 36 auf, die wiederum sternförmig um die Antriebswelle 48 angeordnet sind. Der erste Bügel 64 wird durch eine an das Gehäuse 14 angeformte Einbuchtung 78 ersetzt. Eine Wandung 60 der Einbuchtung 78 wird durch zwei Verschraubungszapfen 34, 36 gebildet, die hierfür entsprechend gestaltet sein können. Der rohrförmige Träger 20 und die Einbuchtung 78 besitzen passende Außenkonturen, so daß der rohrförmige Träger 20 in die Einbuchtung 78 formschlüssig eingelegt werden kann. Vorzugsweise besitzt der rohrförmige Träger 20 eine abgerundete Außenkontur und ist in Richtung der Verschraubungszapfen 34, 36 abgeflacht, so daß er mit diesen formschlüssig in Anlage kommt. Ferner sind formschlüssige Verbindungen wie beim Ausführungsbeispiel in Figur 1 und 2 denkbar.

Durch einen Bügel 26 wird der rohrförmige Träger 20 kraftschlüssig in die Einbuchtung 78 gepreßt. Dieser ist auf einer Seite 28, ausgehend vom rohrförmigen Träger 20 in Richtung 58, an einem Vorsprung 62 in das Gehäuse 14 eingehängt, so daß er die Reaktionskräfte der Klemmkraft aufnehmen kann. Auf der gegenüberliegenden Seite 30 wird der Bügel 26 mit den Schrauben 32 mit dem Gehäuse 14 verschraubt, wodurch die Klemmkraft eingeleitet wird. Der Bügel 26 erstreckt sich nahezu über die gesamte Breite des Getriebes 12, wodurch bei verteilter Flächenpressung eine gute Führung erreicht wird.

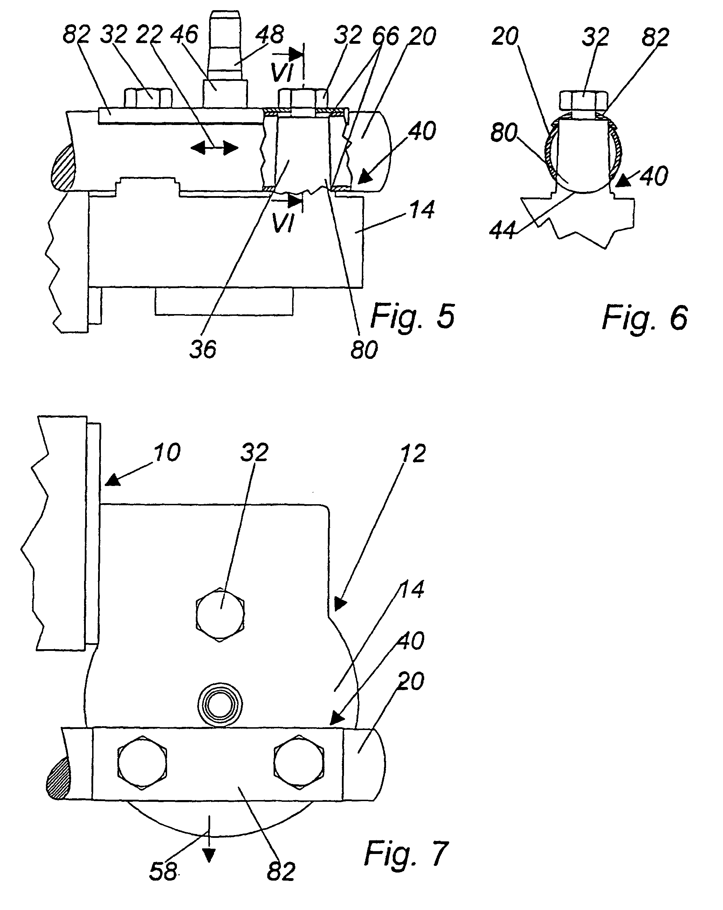

In Figur 5 bis 7 ist die Erfindung mit einer vollständig an das Gehäuse 14 angeformten Aufnahme 40 dargestellt. Aufnahmeflächen 44, siehe Figur 6, sind an Füßen 80 der parallel zu dem Träger 20 angeordneten Verschraubungszapfen 34, 36 angeformt, die eine der Außenkontur des rohrförmigen Trägers 20 entsprechende Kontur aufweisen. Der rohrförmige Träger 20 weist zwei Stufenbohrungen 66 auf, so daß er in die Aufnahmeflächen 44 eingelegt werden kann, indem die Verschraubungszapfen 34, 36 durch ihn hindurch greifen. Anschließend wird der rohrförmige Träger 20 kraftschlüssig durch die Schrauben 32 in den Aufnahmeflächen 44 fixiert. Vorzugsweise sind die Aufnahmeflächen 44 und der rohrförmige Träger 20 zusätzlich zum Kraftschluß auch formschlüssig miteinander verbunden. Dies kann wiederum in Längsrichtung 22 und in Umfangsrichtung analog der zuvor beschriebenen Verbindungen erreicht werden. Mit einer zwischen den Schrauben 32 und dem rohrförmigen Träger 20 angeordneten Versteifungsschale 82 wird die Klemmkraft auf eine größere Fläche auf dem rohrförmigen Träger 20 verteilt. Kritische Flächenpressungen werden vermieden.

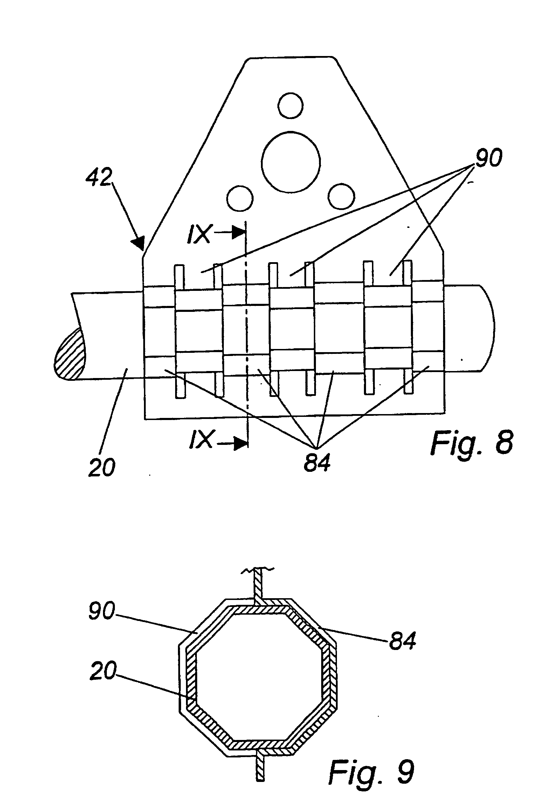

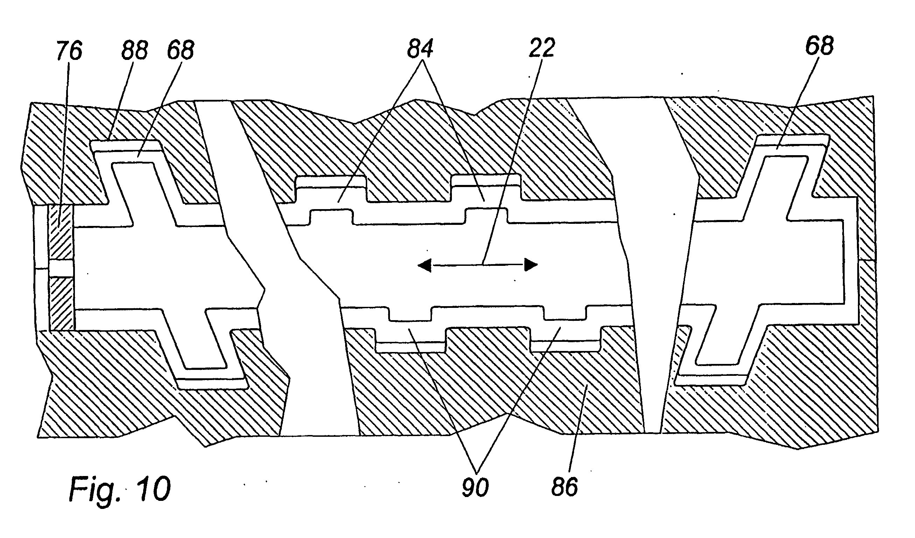

In den Figuren 8 bis 10 ist eine Variante einer Wischeranlage mit einer gemeinsam mit dem rohrförmigen Träger 20 umgeformten Aufnahme 42 dargestellt. Die Aufnahme 42 besteht aus einem einstückigen Platinenblech mit abwechselnd zu einer oder anderen Seite vorstehenden Schalen 84, 90, die durch eine Stanz- und Biegevorgang hergestellt sind. Die Aufnahme 42 wird mit den Schalen 84, 90 über den rohrförmigen Träger 20 geschoben. Anschließend werden beide Werkstücke 42, 20 in ein Umformwerkzeug, vorzugsweise in ein Innenhochdruckverfahren-Werkzeug 86 eingelegt (Figur 10). Mit dem Innenhochdruckverfahren, können verschiedene Fertigungsschritte miteinander verbunden werden, beispielsweise das Anformen von Wischerlageraufnahmen 68, Befestigungselemente an der Karosserie usw..

Nachdem die Werkstücke 42, 20 in das Innenhochdruckverfahren-Werkzeug 86 eingelegt sind, wird der rohrförmige Träger 20 mit Druck beaufschlagt, daß sich dieser und die Schalen 84, 90 an die Innenwandung 88 des Innenhochdruckverfahren-Werkzeugs 86 anlegt, beispielsweise indem über eine Druckmittelzuführung 76 der Innendruck erhöht wird. Die Innenwandung 88 ist vorzugsweise unrund ausgebildet, damit in Umfangsrichtung ein Formschluß zwischen dem Platinenblech und dem rohrförmigen Träger 20 geschaffen werden kann. Es ist von Vorteil, wenn die Schalen 84, 90 von Beginn an entsprechend der Innenwandung 88 unrund vorgeformt sind. Vorzugsweise sind sie soweit vorgeformt, daß zwischen ihnen und dem rohrförmigen Träger 20 eine gute form- und kraftschlüssige Verbindung durch innere Spannungen entsteht und gleichzeitig keine zu hohen Drücke aufgrund der Materialanhäufung angewendet werden müssen.

## Patentansprüche

1. Wischeranlage mit einem Wischermotor (10) und einem Getriebe (12), das mit an seinem Gehäuse (14) angeformten Befestigungsbereichen (16, 34, 36) über eine Aufnahme (38) an einem rohrförmigen Träger (20) befestigt ist und die Aufnahme (38) den rohrförmigen Träger (20) formschlüssig und/oder kraftschlüssig umfasst, **dadurch gekennzeichnet, dass** der rohrförmige Träger (20) formschlüssig in Längs (22) und/oder Umfangsrichtung in eine Einbuchtung (78) der Aufnahme (38) eingelegt ist und ein Befestigungsbereich (34, 36) einen Teil der Einbuchtung (78) bildet.

2. Wischeranlage nach Anspruch 1, **dadurch gekennzeichnet, dass** der rohrförmige Träger (20) durch ein Innenhochdruckverfahren (IHV) hergestellt ist.

3. Wischeranlage nach Anspruch 1 oder 2, **dadurch gekennzeichnet, dass** der rohrförmige Träger (20) in Umfangsrichtung eine unrunde Form und/oder in Längsrichtung (22) eine sich verändernde Kontur, Abmessung oder Ausrichtung aufweist.

4. Wischeranlage nach einem der vorhergehenden Ansprüche, **dadurch gekennzeichnet, dass** die Aufnahme (38) vollständig oder teilweise an das Getriebegehäuse (14) angeformt ist.

5. Wischeranlage nach einem der vorhergehenden Ansprüche, **dadurch gekennzeichnet, dass** ein die Einbuchtung (78) verschließender Bügel (26) den rohrförmigen Träger (20) kraftschlüssig fixiert.

6. Wischeranlage nach Anspruch 5, **dadurch gekennzeichnet, dass** der Bügel (26) den rohrförmigen Träger (20) m Umfangs- und/oder m Längsrichtung (22) formschlüssig fixiert

7. Wischeranlage nach Anspruch 5 oder 6, **dadurch gekennzeichnet, dass** der Bügel (26) auf einer Seite (30) des rohrförmigen Trägers (20) formschlüssig in die Aufnahme (18, 38) eingehängt ist, sich auf dem rohrförmigen Träger (20) abstützt und auf der anderen Seite (28) mit mindestens einer Schraube (32) verspannt wird.

8. Wischeranlage mit einem Wischermotor (10) und einem Getriebe (12), das mit an seinem Gehäuse (14) angeformten Befestigungsbereichen (16, 34, 36) über eine Aufnahme (40) an einem rohrförmigen Träger (20) befestigt ist wobei die Aufnahme (40) den rohrförmigen Träger (20) formschlüssig und/oder kraftschlüssig umfasst und die Aufnahme (40) vollständig oder teilweise an das Getriebegehäuse (14) angeformt ist, **dadurch gekennzeichnet, daß** mindestens an einem Fuß (80) eines Befestigungsbereiches (34, 36) eine Aufnahmefläche (44) angeformt ist, die der Außenkontur des rohrförmigen Trägers (20) entspricht und dass der Befestigungsbereich (34, 36) durch den rohrförmigen Träger (20) hindurchgreift und dieser mit der Schraube (32) kraftschlüssig auf dem Getriebegehäuse (14) fixiert ist.

9. Wischeranlage nach Anspruch 8, **dadurch gekennzeichnet, dass** sich zwischen der Schraube (32) und dem rohrförmigen Träger (20) eine Versteifungsschale (82) befindet.

## Claims

1. Wiper system having a wiper motor (10) and a gear mechanism (12) which is fastened with fastening regions (16, 34, 36), which are integrally formed on its housing (14), to a tubular support (20) via a holder (38) and the holder (38) embraces the tubular support (20) in a form-fitting and/or frictional manner, **characterized in that** the tubular support (20) is inserted into an indentation (78) in the holder (38) in a form-fitting manner in the longitudinal direction (22) and/or circumferential direction, and the fastening region (34, 36) forms part of the indentation (78).

2. Wiper system according to Claim 1, **characterized in that** the tubular support (20) is produced by an internal high-pressure process (IHP).

3. Wiper system according to Claim 1 or 2, **characterized in that** the tubular support (20) has a noncircular shape in the circumferential direction and/or a changing contour, size or orientation in the longitudinal direction (22).

4. Wiper system according to one of the preceding claims, **characterized in that** the holder (38) is completely or partially integrally formed on the gear-mechanism housing (14).

5. Wiper system according to one of the preceding claims, **characterized in that** a bracket (26) which closes the indentation (78) fixes the tubular support (20) in place in a frictional manner.

6. Wiper system according to Claim 5, **characterized in that** the bracket (26) fixes the tubular support (20) in place in the circumferential direction and/or in the longitudinal direction (22) in a form-fitting manner.

7. Wiper system according to Claim 5 or 6, **characterized in that** the bracket (26) is fitted on one side (30) of the tubular support (20) into the holder (18, 38) in a form-fitting manner, is supported on the tubular support (20) and is clamped on the other side (28) by means of at least one screw (32).

8. Wiper system having a wiper motor (10) and a gear mechanism (12) which is fastened with fastening regions (16, 34, 36), which are integrally formed on its housing (14), to a tubular support (20) via a holder (40), the holder (40) embracing the tubular support (20) in a form-fitting and/or frictional manner, and the holder (40) being completely or partially integrally formed on the gear-mechanism housing (14), **characterized in that** a holding surface (44) is integrally formed at least on a base (80) of a fastening region (34, 36), the holding surface corresponding to the outer contour of the tubular support (20), and **in that** the fastening region (34, 36) reaches through the tubular support (20) and the latter is fixed in place on the gear-mechanism housing (14) in a frictional manner by means of the screw (32).

9. Wiper system according to Claim 8, **characterized in that** a stiffening shell (82) is situated between the screw (32) and the tubular support (20).

## Revendications

1. Installation d'essuie-glace comprenant un moteur d'essuie-glace (10) et un mécanisme (12) fixé à un support tubulaire (20) dans des zones de fixation (16, 34, 36) formées sur son carter (14) et par l'intermédiaire d'un logement (38), et le logement (38) entoure le support tubulaire (20) avec liaison par complémentarité de forme et/ou de force,
**caractérisée en ce que**
le support tubulaire (20) est encastré dans une indentation (78) du logement (38) avec liaison par complémentarité de forme dans la direction longitudinale (22) et/ou dans la direction périphérique, et une zone de fixation (34, 36) forme une partie de l'indentation (78).

2. Installation d'essuie-glace selon la revendication 1,
**caractérisée en ce que**
le support tubulaire (20) est fabriqué par un procédé à haute pression intérieure (IHV).

3. Installation d'essuie-glace selon la revendication 1 ou 2,
**caractérisée en ce que**
le support tubulaire (20) présente une forme non circulaire dans la direction périphérique et/ou un profil, une dimension ou une orientation qui varie dans la direction longitudinale (22).

4. Installation d'essuie-glace selon une des revendications précédentes,
**caractérisée en ce que**
le logement (38) est formé, entièrement ou partiellement, sur le carter (14) du mécanisme.

5. Installation d'essuie-glace selon une des revendications précédentes,
**caractérisée en ce qu'**
un étrier (26) qui referme l'indentation (78) immobilise le support tubulaire (20) par une liaison de force.

6. Installation d'essuie-glace selon la revendication 5,
**caractérisée en ce que**
l'étrier (26) immobilise le support tubulaire (20) par complémentarité de forme dans la direction périphérique et/ou dans la direction longitudinale (22).

7. Installation d'essuie-glace selon la revendication 5 ou 6,
**caractérisée en ce que**,
sur un côté (30) du support tubulaire (20), l'étrier (26) est accroché dans le logement (18, 38) avec une liaison par complémentarité de forme, il prend appui sur le support tubulaire (20) et est serré sur l'autre côté (28) par au moins une vis (32).

8. Installation d'essuie-glace comprenant un moteur d'essuie-glace (10) et un mécanisme (12) fixé, dans des zones de fixation (16, 34, 36) formées sur son carter (14) et par l'intermédiaire d'un logement (38) à un support tubulaire (20), le logement (40) entourant le support tabulaire (20) avec une liaison par complémentarité de forme et/ou de force et le logement (40) est formé entièrement ou partiellement sur le carter (14) du mécanisme,
**caractérisée en ce qu'**
au moins à un pied (80) d'une zone de fixation (34, 36), est formée une surface de logement (44) qui correspond au contour extérieur du support tubulaire (20) et la région de fixation (34, 36) est traversée par le support tubulaire (20 ce dernier étant fixé au carter de mécanisme (14) par force au moyen de la vis (32).

9. Installation d'essuie-glace selon la revendication 8,
**caractérisée en ce qu'**
une coquille de rigidification (82) se trouve entre la vis (32) et le support tubulaire (20).
